Europäisches Patentamt

**European Patent Office**

**Office européen des brevets**

(19)

(11) Numéro de publication: **0 041 885**
**B1**

(12)                                    **FASCICULE DE BREVET EUROPEEN**

(45) Date de publication du fascicule du brevet: **19.10.83**

(51) Int. Cl.³: **B 60 T 13/14**

(21) Numéro de dépôt: **81400873.6**

(22) Date de dépôt: **29.05.81**

(54) **Amplificateur hydraulique de freinage.**

(30) Priorité: **06.06.80 FR 8012605**

(43) Date de publication de la demande:
**16.12.81 Bulletin 81/50**

(45) Mention de la délivrance du brevet:
**19.10.83 Bulletin 83/42**

(84) Etats contractants désignés:
**DE GB IT**

(56) Documents cités:
**FR - A - 1 436 608**
**FR - A - 2 210 727**
**FR - A - 2 303 185**
**FR - A - 2 332 445**
**FR - A - 2 338 402**

(73) Titulaire: **SOCIETE ANONYME D.B.A.**
**Centre Paris Pleyel**
**F-93521 St-Denis Cédex 01 (FR)**

(72) Inventeur: **Meynier, Guy**
**13, allée des Sycomores**
**F-93140 Bondy (FR)**

(74) Mandataire: **Poidatz, Emmanuel et al,**
**Service Brevets Bendix 44 rue François 1er**
**F-75008 Paris (FR)**

Courier Press, Leamington Spa, England.

Amplificateur hydraulique de freinage

La présente invention se rapporte aux amplificateurs hydrauliques de freinage.

On connaît de la demande FR—A—2332445 un amplificateur hydraulique de freinage du type comprenant un boîtier dans lequel est réalisée une chambre de travail, un piston moteur coulissant dans ladite chambre de travail, un ensemble de valves de commande comportant une valve haute pression et une valve d'échappement, la valve haute pression étant du type à bille et commandant le passage de fluide entre un orifice d'entrée, conçu pour être relié à une source de fluide sous pression, et ladite chambre de travail, un dispositif de poussoir se projetant dans ladite chambre de travail et commandant ladite valve à bille sous l'action d'un mécanisme à levier en fonction des positions relatives du piston moteur et d'une tige de commande se projetant dans ladite chambre de travail, ledit dispositif de poussoir supportant ladite valve d'échappement, cette dernière commandant le passage de fluide entre la chambre de travail et un orifice d'échappement conçu pour être relié à un réservoir de fluide, la disposition étant telle que ladite valve d'échappement est déplacée dans sa position de fermeture avant l'ouverture de ladite valve haute pression.

Dans l'amplificateur objet de la demande précitée le dispositif de poussoir comporte trois éléments: une douille munie d'un passage central et montée de façon étanche au travers d'une paroi séparant la chambre de travail du compartiment d'échappement, un élément de valve (en l'occurrence une bille) disposé dans le compartiment d'échappement et coopérant avec un siège disposé sur l'extrémité adjacente de la douille à l'embouchure du passage central pour réaliser ainsi la valve d'échappement, et un coulisseau monté de façon étanche dans une paroi séparant le compartiment d'échappement de la chambre de travail et coopérant respectivement avec l'élément de valve et le mécanisme à levier.

Dans le double but d'une part d'améliorer le fonctionnement de la valve d'échappement, notamment en ce qui concerne la qualité de contact entre l'élément de valve et son siège, et d'autre part de limiter le nombre de pièces mobiles constituant le dispositif de poussoir, la présente invention propose un amplificateur de freinage du type spécifié ci-dessus, caractérisé en ce que ledit dispositif de poussoir comprend un poissoir unique traversant un passage ménagé dans le boîtier, le poussoir comportant une surface extérieure en deux parties: une première partie de petite section adjacente à ladite valve à bille et une seconde partie de grande section, et le passage comportant une surface interne également en deux parties: une première partie de petite section adjacente à ladite valve à bille et une seconde partie de grande section, un joint-valve étant monté sur l'une desdites surfaces, appelée surface désignée, à la jonction des deux parties qui constituent ladite surface désignée, ledit joint-valve ayant une section libre intermédiaire entre les sections des deux parties de l'autre surface.

Dans un mode de réalisation préférentiel de l'invention, la partie de petite section du poussoir comporte une projection axiale en direction de ladite valve à bille, ledit poussoir étant rappelé élastiquement vers une position de repos dans laquelle la distance séparant ladite projection et ladite valve à bille est supérieure à la distance séparant ledit joint-valve et la jonction entre les deux parties de l'autre surface.

L'invention sera maintenant décrite en se référant aux dessins annexés dans lesquels:

— La Figure 1 est une vue en coupe longitudinale d'un amplificateur hydraulique selon l'invention, incorporé dans un circuit de freinage représenté schématiquement, et

— La Figure 2 est une vue en coupe agrandie de la partie de la Figure 1 entourée de traits mixtes.

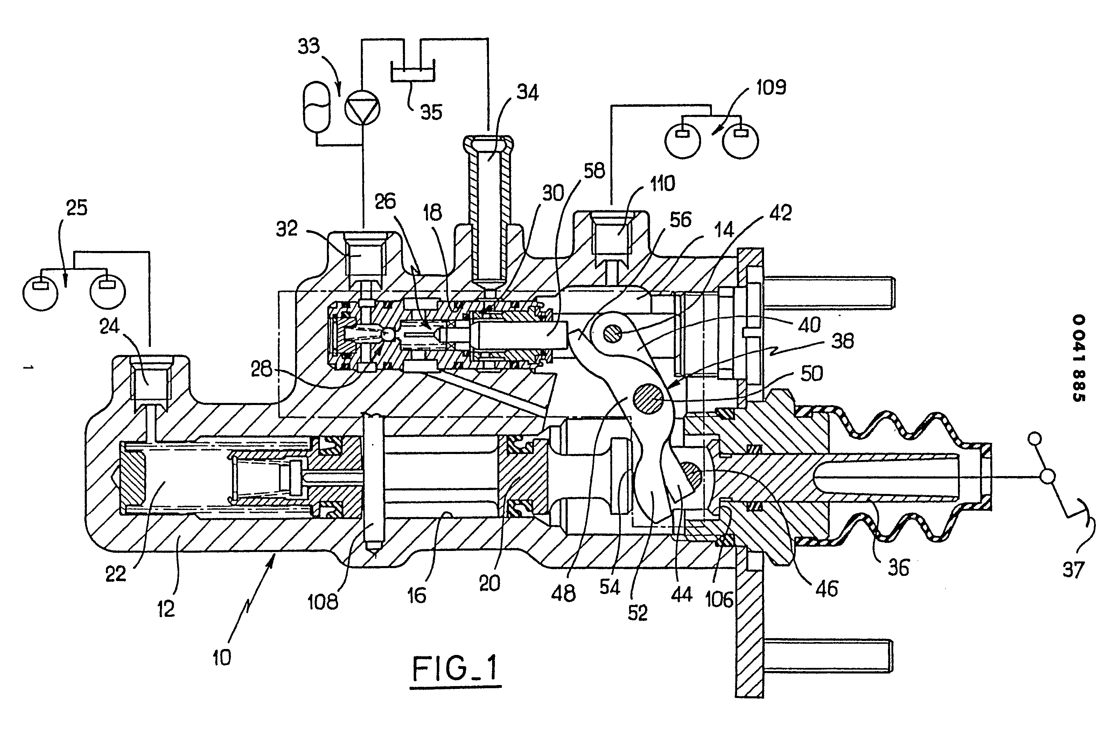

Si l'on considère la Figure 1, un amplificateur hydraulique de freinage (10) comprend un boîtier (12) à l'intérieur duquel sont réalisés deux alésages parallèles (16 et 18) débouchant dans une chambre (14) appelée chambre de travail. Dans le premier alésage (16) est monté coulissant un piston moteur (20) définissant avec l'extrémité fermée de ce même alésage une chambre d'utilisation (22). Les chambres (14) et (20) sont susceptibles d'être reliées à deux jeux de moteurs de freins indépendants (25) et (109) du véhicule, respectivement par les orifices (24) et (110). Dans le second alésage (18) est monté un ensemble de valves de commande (26) comportant une valve haute pression (28) et une valve d'échappement (30), destinées à commander l'écoulement de fluide entre un orifice haute pression (32) reliée à une source de pression (33), la chambre de travail (14) et un orifice d'échappement (34) relié à un réservoir basse pression (35).

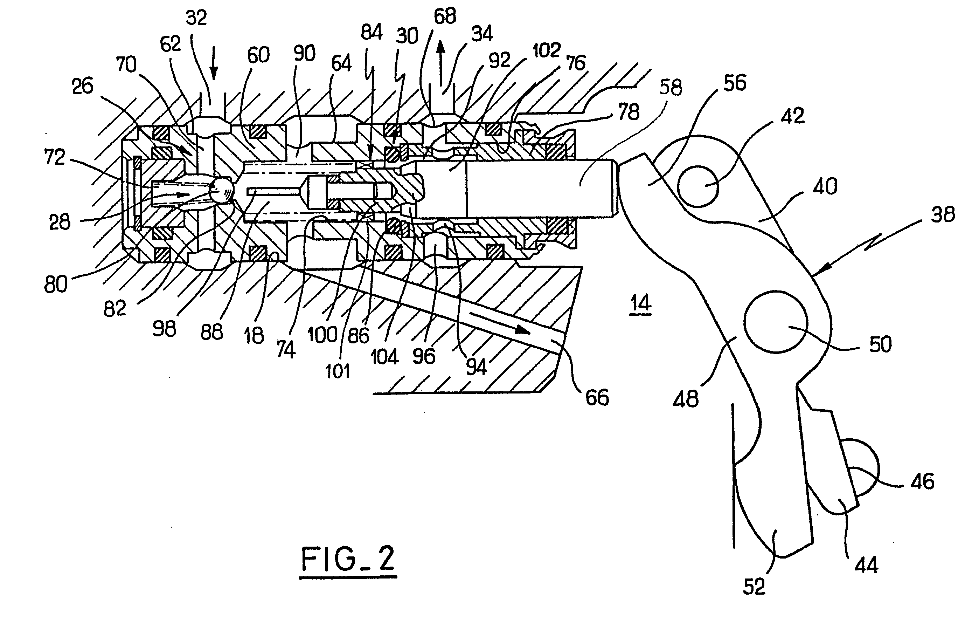

L'ensemble de valves de commande (26) sera maintenant décrit en se référant à la Figure 2. Un fourreau (60), monté fixe et de façon étanche dans l'alésage (18) comporte trois gorges successives: la première (62) communique avec l'orifice d'entrée (32), la seconde (64) communique directement par un passage (66) avec la chambre de travail (14) et la troisième (68) communique avec l'orifice d'échappement (34). Des passages radiaux (70) mettent en communication la première gorge (62) avec une cavité axiale (72) définie dans le fond du fourreau (60). Celui-ci comporte également deux alésages étagés coaxiaux (74) et (76), ce dernier débouchant vers la chambre de travail 14. La valve haute pression (28) comprend une bille (80), montée dans la cavité (72) et sollicitée élastiquement sur un siège (82) défini à l'embouchure de la cavité (72). Les mouvements de la bille (80) sont commandés par un dispositif de poussoir (58) monté coulissant dans une douille (78) montée elle-même de façon étanche dans l'alésage (76) et qui sert de guide au poussoir (58). La paroi extérieure du poussoir (58), la douille (78) et la paroi interne du fourreau (60) définissent un passage (84) séparé en deux parties par un joint-valve annulaire (86) maintenu au fond de l'alésage (76) par la douille (78). Le joint-valve représenté aux Figures a une forme torique, mais, sans sortir du cadre de l'invention, il peut être remplacé par un joint à lèvre, cette lèvre étant dirigée radialement vers l'intérieur. La première partie (88) du passage (84) communique avec la seconde gorge (64) au moyen de passages radiaux (90) tandis que la seconde partie (92) du passage (84) communique avec la troisième gorge (68) au moyen de passages radiaux (94) et (96) ménagés respectivement dans la douille (78) et dans le fourreau (60). Le poussoir (58) comporte une projection de faible diamètre (98), en direction de la bille (80) de la valve haute pression (28). Dans sa partie médiane, le poussoir (58) est étagé et comporte une première partie (100), de diamètre inférieur au diamètre intérieur du joint-valve (86), et une seconde partie (102), de diamètre légèrement supérieur au diamètre intérieur du joint-valve (86), ces deux parties du poussoir (58) étant reliées par une surface tronçônique (104). Cette surface (104) définit avec le joint-valve (86), la valve d'échappement (30).

La première partie (100) du poussoir (58) comporte des projections radiales (101) permettant un guidage précis du poussoir (58) dans l'alésage (74), tout en permettant un libre écoulement du fluide dans le passage (84).

Une tige de commande (36), reliée à la pédale de freinage (37), se projette dans la chambre de travail (14) coaxialement au piston moteur (20).

Un mécanisme à leviers (38) coopère avec la tige de commande (36), le piston moteur (20) et le poussoir (58) de la manière suivante: un levier primaire (40), en deux pièces identiques, dont une seule est représentée à la Figure 1, est montée pivotant autour d'un axe (42) fixe par rapport au boîtier (12), l'extrémité libre (44) de ce levier primaire étant en contact avec une surface de butée (46) de la tige de commande (36); un levier secondaire (48) ou palpeur, monté pivotant sensiblement dans sa partie centrale autour d'un axe (50) solidaire du levier primaire (40), a un premier bras (52) en contact avec l'extrémité postérieure (54) du piston moteur (20) et un second bras (56) en contact avec le poussoir (58).

On notera que ce mécanisme à levier est identique à celui qui est représenté dans le brevet Français publié sous le numéro 1.436.608 et son fonctionnement ne sera pas décrit ici en détail.

Les éléments de l'amplificateur hydraulique de freinage ont été décrits et représentés dans les positions qu'ils occupent au repos, la tige de commande (36) en butée contre un épaulement (106) du boîtier (12), le piston-moteur (20) en butée contre une goupille (108) traversant le premier alésage (16) et le poussoir (58) en position de recul, au contact du bras (56) du levier secondaire (48), la surface tronçônique (104) du poussoir étant éloignée du joint-valve (86) d'une distance axiale inférieure à celle qui sépare l'extrémité de la projection (98) de la bille (80) de la valve haute pression (28). De la sorte, la valve haute pression (28) étant fermée, le fluide sous pression est contenu dans la cavité (72), et la valve d'échappement (30), constituée en l'espèce par le joint-valve (86) et la surface tronçônique (104), est ouverte, mettant ainsi en communication la chambre de travail (14) avec le réservoir (35) via le conduit (66), les deux parties (88) et (92) du passage (84) et l'orifice de sortie (34).

Le fonctionnement de l'amplificateur de freinage est le suivant.

Lors d'une application de freinage, la tige de commande est déplacée en direction du piston-moteur (20). Il en résulte un pivotement du levier primaire (40) autour de son axe (42). La raideur du ressort de rappel du poussoir (58) étant inférieure à celle du ressort de rappel du piston moteur (20), le bras (52) du levier secondaire (48) reste par conséquent immobile tandis que le bras (56) de ce même levier provoque le déplacement du poussoir (58) en direction de la valve haute pression (28). Au cours de ce déplacement, la surface tronçônique (104) du poussoir (58) vient s'appliquer sur la surface interne du joint-valve (86), provoquant ainsi la fermeture de la valve d'échappement (30) et l'isolement de la chambre de travail (14) par rapport au réservoir (35). Lorsque le déplacement du poussoir (58) se poursuit, l'extrémité de la projection (98) du poussoir (58) vient dégager la bille (80) en éloignement de son siège (82), provoquant ainsi l'ouverture de la valve haute pression (28) et l'admission de fluide sous pression dans la chambre de travail (14) via le passage (66). Cette pression agit sur le piston moteur (20) qui se déplace pour comprimer le fluide dans la chambre d'utilisation (22) et alimenter les moteurs de freins (25) reliés à l'orifice de sortie (24). La pression régnant dans la chambre de travail (14) agit également sur la tige de commande (36) pour délivrer à la pédale une force de réaction représentative de la pression de freinage. On remarquera que le déplacement du piston moteur (20) provoque un basculement inverse du levier secondaire (48) et un rappel du poussoir (58) en éloignement par rapport à la valve haute pression (28), de telle sorte que la pression de freinage reste constamment proportionnelle à la force de freinage appliquée par l'opérateur.

Lors du relâchement de l'effort de freinage, le recul de la tige de commande (36) provoque le basculement inverse du levier primaire (40) et le rappel du poussoir (58) dans sa position rétractée dans laquelle il est représenté aux Figures. Le dégagement de la surface tronçônique (104) du poussoir (58) par rapport au joint-valve (86) provoque l'ouverture de la valve d'échappement (30) et la mise en communication de la chambre de travail (14) avec le réservoir. Par suite de la diminution de pression dans la chambre de travail, le piston-moteur (20) est rappelé vers sa position de repos.

Il y a lieu de remarquer que la coopération entre la surface tronçônique (104) du poussoir (58) et le joint-valve annulaire (86) pour réaliser la valve d'échappement (30) procure certains avantages par rapport aux systèmes connus. Notamment, le contact obtenu entre le joint-valve (86) et la surface tronçônique (104) du poussoir assure une très bonne étanchéité de la valve d'échappement quel que soit l'état de surface de la partie tronçônique (104); de plus, lors des déplacements relatifs du poussoir (58) par rapport au joint-valve (86), l'étanchéité du contact entre l'un et l'autre est maintenu grâce à l'action de "balayage" de la surface extérieure du poussoir par le joint.

Un avantage complémentaire de l'invention réside dans la diminution des pièces constitutives de l'ensemble de valves de commande (26). En effet, un seul élément, le poussoir (58) permet de commander séquentiellement la fermeture de la valve d'échappement (30) et l'ouverture de la valve haute pression (28).

L'invention ne se limite pas au mode de réalisation représenté et comprend les variantes, non représentées, selon lesquelles:

— le joint-valve (86) est monté sur le poussoir (58). Dans ce cas, le passage (84) est étagé, la première partie (88) du passage ayant un diamètre légèrement inférieur au diamètre externe du joint-valve, tandis que la deuxième partie (92) du passage a un diamètre supérieur au diamètre externe du joint-valve, les deux parties de passage étant reliées par une surface tronçônique.

— le conduit (66) reliant la première partie (88) du passage (84) et la chambre de travail (14) est ménagé dans le poussoir (58). Une telle disposition permet une simplification notable de la forme du fourreau (60), ainsi que du boîtier (12).

## Revendications

1. Amplificateur hydraulique de freinage du type comportant un boîtier (12) dans lequel est réalisée une chambre de travail (14), un piston moteur (20) coulissant dans ladite chambre de travail (14), un ensemble de valves de commande (26) comportant une valve haute pression (28) et une valve d'échappement (30), la valve haute pression (28) étant du type à bille (80) et commandant le passage de fluide entre un orifice d'entrée (32), conçu pour être relié à une source de fluide sous pression (33), et ladite chambre de travail (14), un dispositif de poussoir (58) se projetant dans ladite chambre de travail (14) et commandant ladite valve à bille (80) sous l'action d'un mécanisme à levier (38) en fonction des positions relatives du piston moteur (20) et d'une tige de commande (36) se projetant dans ladite chambre de travail (14), ledit dispositif de poussoir (58) supportant ladite valve d'échappement (30), cette dernière commandant le passage de fluide entre la chambre de travail (14) et un orifice d'échappement (34) conçu pour être relié à un réservoir de fluide (35), la disposition étant telle que ladite valve d'échappement (30) est déplacée dans sa position de fermeture avant l'ouverture de ladite valve haute pression (28), ledit amplificateur hydraulique étant caractérisé en ce que ledit dispositif de poussoir (58) comprend un poussoir unique (58) traversant un passage (84) ménagé dans le boîtier (12), le poussoir (58) comportant une surface extérieur en deux parties: une première partie (100) de petite section adjacente à ladite valve à bille (80) et une seconde partie (102) de grande section, et le passage (84) comportant une surface interne également en deux parties: une première partie (88) de petite section adjacente à ladite valve à bille (80) et une seconde partie (92) de grande section, un joint-valve (86) étant monté sur l'une desdites surfaces (88—92), appelée surface désignée, à la jonction des deux parties qui constituent ladite surface désignée, ledit joint-valve (86) ayant une section libre intermédiaire entre les sections des deux parties de l'autre surface (100—102).

2. Amplificateur hydraulique selon la revendication 1, caractérisé en ce que ledit joint-valve (86) consiste en une bague annulaire en matériau élastomère, montée dans une gorge prévue dans ladite surface désignée (88—92) et faisant saillie vers l'autre surface (100—102).

3. Amplificateur hydraulique selon la revendication 2, caractérisé en ce que lesdites parties de petite section (100) et de grande section (102) de ladite autre surface sont reliées par une surface tronçônique (104).

4. Amplificateur hydraulique selon la revendication 3, caractérisé en ce que ladite partie de grande section (102) du poussoir (58) est montée coulissante de manière étanche au travers d'une paroi (78) séparant ladite chambre de travail (14) et ledit passage (84).

## Patentansprüche

1. Hydraulischer Bremskraftverstärker mit einem Gehäuse (12), in dem eine Arbeitskammer (14) gebildet ist, einem Antriebskolben (20), der in der Arbeitskammer (14) gleitet, eine Anordnung von Steuerventilen (26), die ein Hochdruckventil (28) und ein Ablaßventil (30) aufweist, von denen das Hochdruckventil (28) als Kugelventil (80) ausgebildet ist und den Durchtritt von Strömungsmittel zwischen der Arbeitskammer (14) und einer Einlaßöffnung (32) steuert, die an einer Druckquelle (33) anschließbar ist, einer Stößelvorrichtung (58), die in die Arbeitskammer (14) vorsteht und das Kugelventil (80) unter der Wirkung eines Hebelmechanismus (38) steuert, und zwar in Abhängigkeit von Relativstellungen des Antriebskolbens (20) und einer Steuerstange (36), die in die Arbeitskammer (14) hineinragt, wobei die Stößelvorrichtung (58) das Ablaßventil (30) abstützt, wobei das letztere den Durchtritt von Strömungsmittel zwischen der Arbeitskammer (14) und einer Ablaßöffnung (34) steuert, die an einem Strömungs-mittelreservoir (35) anschließbar ist, wobei die Anordnung so getroffen ist, daß das Ablaßventil (30) vor Öffnen des Hochdruckventils (28) in seine Schließstellung verschoben wird, dadurch gekennzeichnet, daß die Stößelvorrichtung (58) einen einzigen Stößel (58) aufweist, der einen Kanal (84) im Gehäuse (12) durchquert, wobei der Stößel (58) eine in zwei Abschnitte unterteilte Außenfläche aufweist: einen ersten Abschnitt (100) kleinen Querschnitts angrenzend an dem Kugelventil (80) und einen zweiten Abschnitt (102) großen Querschnitts, und wobei der Kanal (84) eine ebenfalls in zwei Abschnitte unterteilte Innenfläche aufweist: einen ersten Abschnitt (88) kleinen Querschnitts angrenzend am Kugelventil (80) und einen zweiten Abschnitt (92) großen Querschnitts, und daß ein Verbindungsventil (86) an einer der Flächen (88—92), im folgenden die besagte Fläche genannt, an der Verbindungsstelle der beiden Abschnitte, die die besagte Fläche bilden, angebracht ist, wobei das Verbindungsventil (86) einen freien Quer-schnitt intermediär zwischen den Quer-schnitten der beiden Abschnitte der anderen Fläche (100—102) besitzt.

2. Hydraulischer Bremskraftverstärker nach Anspruch 1, dadurch gekennzeichnet, daß das Verbindungsventil (86) aus einem Ring aus elastomerem Material besteht, der in einer Nut der besagten Fläche (88—92) angebracht ist und in Richtung auf die andere Fläche (100—102) vorsteht.

3. Hydraulischer Bremskraftverstärker nach Anspruch 2, dadurch gekennzeichnet, daß die Abschnitte kleinen Querschnitts (100) und großen Querschnitts (102) der anderen Fläche durch eine kegelstumpfförmige Fläche (104) miteinander verbunden sind.

4. Hydraulischer Bremskraftverstärker nach Anspruch 3, dadurch gekennzeichnet, daß der Abschnitt großen Querschnitts (102) des Stößels (58) gleitend und abgedichtet eine Wand (78) durchquert, die die Arbeitskammer (14) von dem Kanal (84) trennt.

## Claims

1. A hydraulic brake booster of the type including a casing (12) in which is defined a working chamber (14), a driving piston (20) sliding in said working chamber (14), a set of control valves (26) including a high-pressure valve (28) and an exhaust valve (30), the high pressure valve (28) being a ball valve (80) and controlling the flow of fluid between an inlet orifice (32), connectible to a source of fluid under pressure (33), and said working chamber (14), pushrod means (58) projecting into said working chamber (14) and controlling said ball-valve (80) under the action of a lever mechanism (38) as a function of the relative positions of the driving piston (20) and of a control rod (36) which projects into said working chamber (14), said pushrod means (58) supporting said exhaust valve (30), the latter controlling the flow of fluid between the working chamber (14) and an exhaust orifice (34) connectible to a fluid reservoir (35), the arrangement being such that said exhaust valve (30) is displaced into its closed position before the opening of said high-pressure valve (28), said hydraulic booster being characterized in that said pushrod means (58) comprises a single pushrod (58) which passes through a passage (84) provided in the casing (12), the pushrod (58) having an outer surface comprising two portions: a first portion (100) of small cross section adjacent to said ball-valve (80) and a second portion (102) of large cross-section, and the passage (84) having an inner surface similarly comprising two portions: a first portion (88) of small cross-section adjacent to said ball-valve (80) and a second portion (92) of large cross-section, a valve seal (86) being mounted upon one of said surfaces (88, 92), called the designated surface, at the junction of the two portions which constitute said designated surface, said valve seal (86) having a free cross-section intermediate the cross-sections of the two portions of the other surface (100, 102).

2. A hydraulic booster according to claim 1, characterized in that said valve seal (86) comprises an annular ring of elastomeric material, mounted in a recess provided in said designated surface (88, 92) and projecting towards the other surface (100, 102).

3. A hydraulic booster according to claim 2, characterized in that said portions of small cross-section (100) and of large cross-section (102) of said other surface are connected by a frustoconical surface (104).

4. A hydraulic booster according to claim 3, characterized in that said portion of large cross-section (102) of the pushrod (58) is slidably mounted in fluidtight manner through a wall (78) which separates said working chamber (14) from said passage (84).

FIG_1

0041885

FIG_2